# EUROPEAN PATENT APPLICATION

(11) **EP 4 586 447 A1**
(43) Date of publication of application: **16.07.2025**
(21) Application number: 23862931.5
(22) Date of filing: 22.08.2023
(51) Int. Cl.: H02J 7/00, H01M 10/44, H01M 10/48

(54) **DETERIORATION INHIBITION CONTROL SYSTEM, DETERIORATION INHIBITION CONTROL METHOD AND DETERIORATION INHIBITION CONTROL PROGRAM, AND RECORDING MEDIUM HAVING DETERIORATION INHIBITION CONTROL PROGRAM DESCRIBED THEREON**

(30) Priority: 05.09.2022 JP 2022140794
(71) Applicant: Panasonic Intellectual Property Management Co., Ltd., Kadoma-shi, Osaka 571-0057 (JP)
(72) Inventor: YANG, Changhui, Kadoma-shi, Osaka 571-0057 (JP); MATSUDA, Takashi, Kadoma-shi, Osaka 571-0057 (JP); SADA, Tomokazu, Kadoma-shi, Osaka 571-0057 (JP)
(74) Representative: Novagraaf International SA
(86) International application number: PCT/JP2023/030174
(87) International publication number: WO 2024/053392

(57) **Abstract**

**In** a deterioration inhibition control system, a data obtainment unit obtains battery data including a voltage and an electric current of a secondary battery. A deterioration estimation unit estimates, based on the battery data of the secondary battery, a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode. When the rate of decrease in the excess capacity of the positive electrode is greater than the rate of decrease in the excess capacity of the negative electrode, a charging/discharging control unit switches charging/discharging control to charging/discharging control that prioritizes deterioration inhibition for the positive electrode, and when the rate of decrease in the excess capacity of the negative electrode is greater than the rate of decrease in the excess capacity of the positive electrode, the charging/discharging control unit switches the charging/discharging control to charging/discharging control that prioritizes deterioration inhibition for the negative electrode.

## Description

### Technical Field

The present disclosure relates to a deterioration inhibition control system, a deterioration inhibition control method, and a deterioration inhibition control program for inhibiting deterioration of a secondary battery.

### Background Art

In recent years, lithium-ion batteries have been used in various applications. In order to inhibit deterioration of a lithium-ion battery, it is common to switch a charging/discharging control method under the condition that a voltage, an electric current, and a temperature in the lithium-ion battery remain unchanged. In view of this, a method has been proposed in which the inner state of a lithium-ion battery (more specifically, the state of deterioration of each of the positive electrode and the negative electrode thereof) is estimated and a charging/discharging control method is switched (for example, refer to Patent Literature (PTL) 1). PTL 1 proposes a method in which when the difference between the capacity of the positive electrode and the capacity of the negative electrode or the difference between the discharging terminal potential of the positive electrode and the discharging terminal potential of the negative electrode is reversed into a negative value, the operation condition of a secondary battery is changed.

### [Citation List

### Patent Literature

PTL 1: Unexamined Japanese Patent Publication No. 2017-054692

### Summary of Invention

In secondary battery design, an extra capacity that is out of the range of a battery capacity and not used for actual charging or discharging is typically added to each of a positive electrode and a negative electrode. When the extra capacity added is large, the control based on the difference between the capacity of the positive electrode and the capacity of the negative electrode or the difference between the discharging terminal potential of the positive electrode and the discharging terminal potential of the negative electrode does not necessarily ensure the maximum battery capacity.

The present disclosure is conceived in light of the circumstances and aims to provide a technique that can minimize deterioration of a secondary battery.

In order to solve the above problem, a deterioration inhibition control system according to an aspect of the present disclosure includes: an obtainment unit that obtains battery data including a voltage and an electric current of a secondary battery; an estimation unit that estimates, based on the battery data of the secondary battery, a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and a charging/discharging control unit that when the rate of decrease in the excess capacity of the positive electrode is greater than the rate of decrease in the excess capacity of the negative electrode, switches charging/discharging control to charging/discharging control that prioritizes deterioration inhibition for the positive electrode, and when the rate of decrease in the excess capacity of the negative electrode is greater than the rate of decrease in the excess capacity of the positive electrode, switches the charging/discharging control to charging/discharging control that prioritizes deterioration inhibition for the negative electrode.

Note that an arbitrary combination of the structural elements described above and those obtained by converting the expressions described in the present disclosure into devices, systems, methods, computer programs, recoding media, and the like are also effective as embodiments of the present disclosure.

According to the present disclosure, it is possible to minimize deterioration of a secondary battery.

### Brief Description of Drawings

[Fig. 1] Fig. 1 is a diagram for describing a deterioration inhibition control system for a secondary battery.
[Fig. 2] Fig. 2 is a diagram illustrating one example of a storage deterioration characteristics map.
[Fig. 3A] Fig. 3A is a diagram illustrating one example of a charging/discharging deterioration characteristics map.
[Fig. 3B] Fig. 3B is a diagram illustrating one example of a charging/discharging deterioration characteristics map.
[Fig. 4] Fig. 4 is a diagram illustrating one example of charging/discharging curves and dV/dQ curves of a secondary battery, a positive electrode, and a negative electrode.
[Fig. 5] Fig. 5 is a diagram illustrating another example of a dV/dQ curve of a secondary battery.
[Fig. 6] Fig. 6 is a diagram illustrating one example of charging/discharging curves of a secondary battery, a positive electrode, and a negative electrode in the initial state of one secondary battery.
[Fig. 7] Fig. 7 is a diagram illustrating an example in which the charging/discharging curves of a secondary battery, a positive electrode, and a negative electrode are reduced in width.
[Fig. 8] Fig. 8 is a flowchart illustrating the flow of the process of switching a charging/discharging control method performed by a deterioration inhibition control system according to an exemplary embodiment.
[Fig. 9] Fig. 9 is a flowchart illustrating one example of deterioration inhibition control performed during charging by a deterioration inhibition control system according to an exemplary embodiment.

### Description of Embodiments

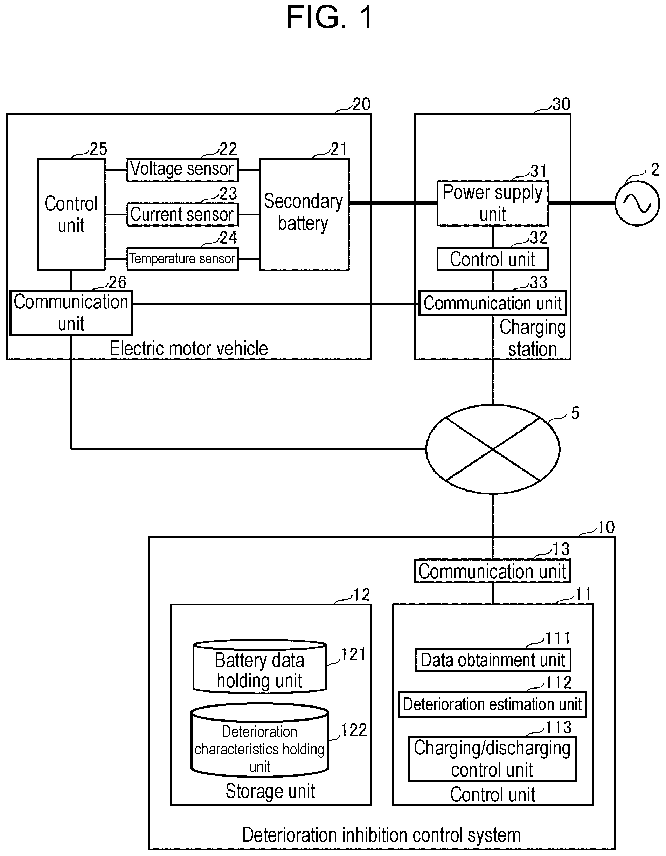

Fig. 1 is a diagram for describing deterioration inhibition control system 10 for a secondary battery. Deterioration inhibition control system 10 is a system that analyzes the state of deterioration of secondary battery 21 mounted on electric motor vehicle 20 and performs the optimal deterioration inhibition control for secondary battery 21. Deterioration inhibition control system 10 may be constructed on a company server installed in a data center or a company facility of an operator that provides a deterioration analysis service of secondary battery 21 mounted on electric motor vehicle 20, for example. Furthermore, deterioration inhibition control system 10 may be constructed on a cloud server to be used on the basis of a cloud service. Alternatively, deterioration inhibition control system 10 may be constructed on two or more servers spread across two or more sites (a data center and a company facility). The two or more servers may be two or more company servers combined, two or more cloud servers combined, or a company server and a cloud server combined.

The present exemplary embodiment assumes that electric motor vehicle 20 is electric motor vehicle 20 to be used by a courier.

Secondary battery 21 mounted on electric motor vehicle 20 supplies electric power to a drive motor (not illustrated in the drawings). Secondary battery 21 includes a plurality of cells or a plurality of parallel cell blocks connected in series.

Each of the parallel cell blocks includes a plurality of cells connected in parallel.

As the cells, lithium-ion battery cells, nickel-hydrogen battery cells, lead-acid battery cells, and the like can be used. The following example herein assumes that lithium-ion battery cells (with a nominal voltage of 3.6 V to 3.7 V) are used. The number of cells or parallel cell blocks connected in series is determined according to the voltage of the drive motor.

Voltage sensor 22 measures voltages between both ends (a voltage between a positive electrode and a negative electrode) of the cells or the parallel cell blocks connected in series. A shunt resistor is connected in series with the plurality of cells or the plurality of parallel cell blocks connected in series. On the basis of a voltage between the both ends of the shunt resistor, current sensor 23 measures an electric current flowing to the cells or the parallel cell blocks connected in series. Note that a Hall element may be used instead of the shunt resistor. Temperature sensor 24 measures the temperature of the plurality of cells or the plurality of parallel cell blocks on the basis of the divided voltage of the resistor and a thermistor provided on at least one of the plurality of cells or the plurality of parallel cell blocks.

Control unit 25 includes a battery management unit (BMU) and an electronic control unit (ECU) that work in coordination. The BMU estimates a state of charge (SOC) by an open circuit voltage (OCV) method and a current integration method combined. The OCV method is a method for estimating an SOC on the basis of the OCV of each cell measured and the SOC-OCV curve of the cell. The current integration method is a method for estimating an SOC on the basis of the OCV measured at the start of charging or discharging of each cell and the integrated value of electric currents measured. In the current integration method, measurement errors of electric currents accumulate as the charging/discharging time increases. Therefore, the SOC estimated by the current integration method is preferably corrected using the SOC estimated by the OCV method.

The BMU samples the voltage, the electric current, the temperature, and the SOC of the plurality of cells or the plurality of parallel cell blocks at regular intervals (for example, 10-second intervals). The BMU transmits battery data including the voltage, the electric current, the temperature, and the SOC of the plurality of cells or the plurality of parallel cell blocks to the ECU via an in-vehicle network. For example, a controller area network (CAN), a local interconnect network (LIN), or the like can be used as the in-vehicle network.

Communication unit 26 includes: the function of performing communication signal processing with communication unit 33 of charging station 30; and the function of performing wireless signal processing for connection to network 5. Communication unit 26 can access network 5 by using a mobile network (cellular network), a wireless local area network (LAN), vehicle-to-infrastructure (V2I), vehicle-to vehicle (V2V), an electronic toll collection system (ETC system), or a dedicated short range communications (DSRC), for example.

Network 5 is the generic name of communication channels such as the Internet, a dedicated line, and a virtual private network (VPN); the communication medium, the protocol, etc., of network 5 are not limited. As the communication medium, a mobile network (cellular network), a wireless LAN, a wired LAN, a fiber optic network, an asymmetric digital subscriber line (ADSL) network, or a cable television (CATV) network can be used, for example. As the communication protocol, transmission control protocol (TCP)/Internet protocol (IP), user datagram protocol (UDP)/IP, or Ethernet (registered trademark) can be used, for example.

The ECU may transmit the sampled battery data to deterioration inhibition control system 10 upon every sampling or may accumulate the sampled battery data in the memory therein and transmit a collection of the battery data that has accumulated in the memory to deterioration inhibition control system 10 at a predetermined timing. Note that the ECU may transmit the battery data that has accumulated in the memory to deterioration inhibition control system 10 via charging station 30 in the state where electric motor vehicle 20 and charging station 30 are connected by a charging cable.

When electric motor vehicle 20 is connected to charging station 30 by a charging cable, secondary battery 21 in electric motor vehicle 20 can be charged from the outside. Charging station 30, which is connected to commercially available power system 2, charges secondary battery 21.

Generally, normal charging is performed using an alternating current, and fast charging is performed using a direct current. When charging is performed using an alternating current (for example, single phase 100/200 V), a charging voltage or a charging current is controlled on a charger (not illustrated in the drawings) in electric motor vehicle 20. When charging is performed using a direct current, the charging voltage or the charging current is controlled on power supply unit 31 of charging station 30. Power supply unit 31, which includes a rectifier circuit, a filter, and a DC/DC converter, provides, by the rectifier circuit, full-wave rectification of alternating-current power supplied from commercially available power system 2, performs smoothing by the filter, and thus generates direct-current power. The DC/DC converter controls the voltage or the electric current of the direct-current power generated.

As a fast charging standard, CHAdeMO (registered trademark), ChaoJi, GB/T, or the combined charging system (Combo) can be used, for example. In CHAdeMO 2.0, the maximum power (specification) is set to 1,000 V × 400 A = 400 kW. In CHAdeMO 3.0, the maximum power (specification) is set to 1,500 V × 600 A = 900 kW. In ChaoJi, the maximum power (specification) is set to 1,500 V × 600 A = 900 kW. In GB/T, the maximum power (specification) is set to 750 V × 250 A = 185 kW. In Combo, the maximum power (specification) is set to 900 V × 400 A = 350 kW. In CHAdeMO, ChaoJi, and GB/T, the CAN is used as a communication system. In Combo, power line communication (PLC) is used as a communication system.

A charging cable that supports the CAN system includes not only a power line, but also a communication line. When electric motor vehicle 20 and charging station 30 are connected by said charging cable, control unit 25 of electric motor vehicle 20 establishes a communication channel with control unit 32 of charging station 30. Note that in a charging cable that supports the PLC system, a communication signal is transmitted over a power line.

Communication unit 33 of charging station 30 includes: the function of performing communication signal processing with communication unit 26 of electric motor vehicle 20; and the function of performing signal processing for connection to network 5. Communication unit 33 can access network 5 by using a wired LAN, a wireless LAN, or a mobile network (cellular network), for example.

Deterioration inhibition control system 10 includes control unit 11, storage unit 12, and communication unit 13. Communication unit 13 is a communication interface (for example, a network interface card (NIC)) for connection to network 5 by wired or wireless means.

Control unit 11 includes data obtainment unit 111, deterioration estimation unit 112, and charging/discharging control unit 113.

The functions of control unit 11 can be implemented by the coordination of a hardware resource and a software resource or can be implemented by a hardware resource only. As the hardware resource, a central processing unit (CPU), read-only memory (ROM), random-access memory (RAM), a graphics processing unit (GPU), an application specific integrated circuit (ASIC), a field programmable gate array (FPGA), and other large-scale integration (LSI) can be used. As the software resource, an operating system and a program such as an application can be used. The program has been recorded in the memory of storage unit 12 in advance, but the program may be provided through an electric communication line such as the Internet or may be recorded on a (non-transitory) recording medium such as a memory card to be provided.

Storage unit 12 includes a non-volatile recording medium such as a hard disk drive (HDD) and a solid-state drive (SSD) and stores various data. Storage unit 12 includes battery data holding unit 121 and deterioration characteristics holding unit 122. Battery data holding unit 121 accumulates the battery data obtained by data obtainment unit 111 from electric motor vehicle 20 or charging station 30.

Deterioration characteristics holding unit 122 holds, for each type of the secondary battery, the storage deterioration characteristics, the charging deterioration characteristics, and the discharging deterioration characteristics of the positive electrode, and the storage deterioration characteristics, the charging deterioration characteristics, and the discharging deterioration characteristics of the negative electrode.

Deterioration characteristics holding unit 122 holds, as battery information for identifying the type of the secondary battery, at least one item of information such as a model number, a model type, a cell shape, a positive electrode material, a composition ratio of a positive electrode material, a negative electrode material, a composition ratio of a negative electrode material, an energy weight density, and energy volume density. The data in deterioration characteristics holding unit 122 is updated every time a new type of secondary battery is registered. Furthermore, when the characteristics information of the secondary battery already registered is updated, the data in deterioration characteristics holding unit 122 is also updated.

The storage deterioration of the secondary battery is deterioration that progresses over time according to the temperature of the secondary battery at each point in time and the SOC of the secondary battery at each point in time. The deterioration progresses over time regardless of whether the secondary battery is being charged or discharged. The storage deterioration occurs mainly due to the formation of a solid electrolyte interphase (SEI) layer on the negative electrode. The storage deterioration depends on the SOC and the temperature measured at each point in time.

Generally, as the SOC at each point in time increases and the temperature at each point in time increases, the storage deterioration speed increases.

The charging/discharging deterioration of the secondary battery is deterioration that progresses further as the number of charging/discharging sessions increases. The charging/discharging deterioration occurs mainly due to cracks, separation, or the like of active materials caused by expansion and contraction thereof. The charging/discharging deterioration depends on the SOC range, the temperature, and the current rate applied. Generally, the charging/discharging deterioration speed increases with an increase in the width of the SOC range applied, an increase in the temperature applied, and an increase in the current rate applied.

The storage deterioration characteristics, the charging deterioration characteristics, and the discharging deterioration characteristics of the positive electrode and the storage deterioration characteristics, the charging deterioration characteristics, and the discharging deterioration characteristics of the negative electrode are derived in advance for each type of the secondary battery through experiments, simulations, and the like conducted by a battery manufacturer.

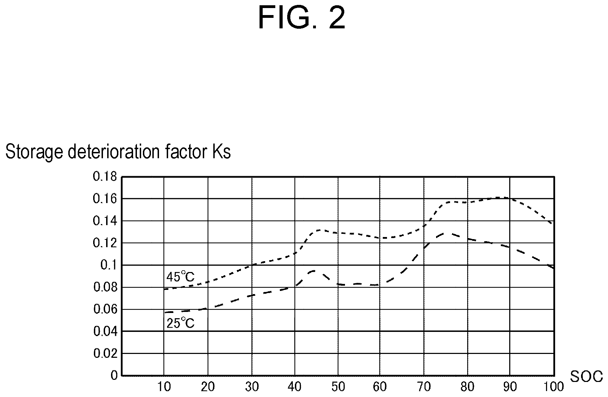

Fig. 2 is a diagram illustrating one example of a storage deterioration characteristics map. The horizontal axis represents the SOC [%], and the vertical axis represents storage deterioration factor Ks. Generally, the storage deterioration progresses approximately linearly with respect to the 0.5-th power (square root) of elapsed time (h). Note that depending on the type of the secondary battery, the storage deterioration may progress approximately linearly with respect to the 0.4-th power of elapsed time (h), the 0.6-th power of elapsed time (h), or the like.

In Fig. 2, only the storage deterioration characteristics with respect to two temperatures, 25°C and 45°C, are plotted for the sake of simplification, but in actuality, storage deterioration characteristics with respect to a large number of temperatures are generated. Note that the storage deterioration characteristics may be defined in a storage deterioration characteristics model (function) in which the SOC and the temperatures are explanatory variables and storage deterioration factor Ks is a response variable, instead of the map.

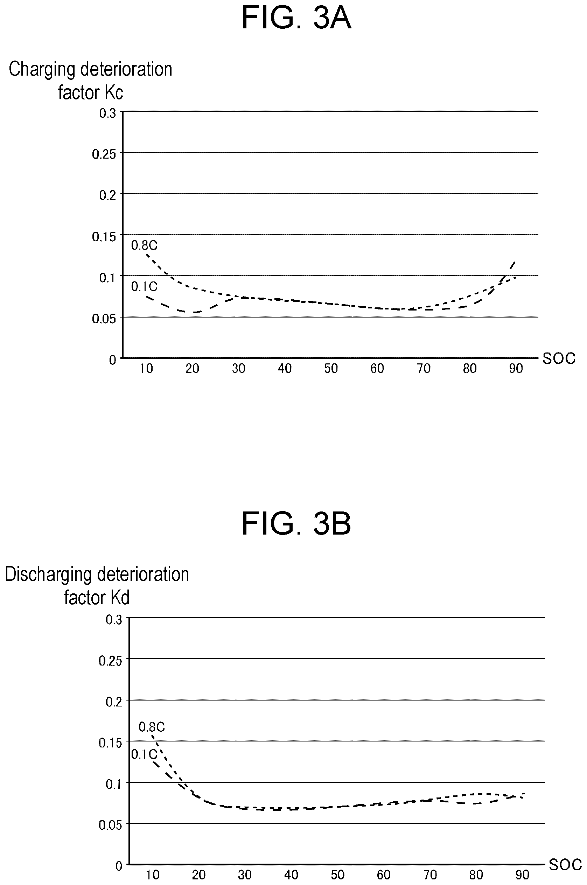

Fig. 3A and Fig. 3B are diagrams illustrating one example of a charging/discharging deterioration characteristics map. Fig. 3A illustrates one example of a charging deterioration characteristics map, and Fig. 3B illustrates one example of a discharging deterioration characteristics map. The horizontal axis represents the range of use of the SOC [%]. In Fig. 3A and Fig. 3B, the value of each SOC indicates the lower limit of the 10% range of use. For example, SOC 10% indicates that charging or discharging is performed when the SOC is in the range of 10% to 20%, and SOC 11% indicates that charging or discharging is performed when the SOC is in the range of 11% to 21%. The vertical axes represent charging/discharging deterioration factors Kc, Kd.

Generally, the charging/discharging deterioration progresses approximately linearly with respect to the 0.5-th power (square root) of the total amount of charging or discharging (Ah). Note that depending on the type of the secondary battery, the charging/discharging deterioration may progress approximately linearly with respect to the 0.4-th power of the total amount of charging or discharging (Ah), the 0.6-th power of the total amount of charging or discharging (Ah), or the like.

In Fig. 3A and Fig. 3B, only the charging/discharging deterioration characteristics with respect to two current rates, 0.1 C and 0.8 C, are plotted for the sake of simplification, but in actuality, charging/discharging deterioration characteristics with respect to a large number of current rates are generated. Fig. 3A shows that at the time of charging, the charging/discharging deterioration speed increases in regions where the range of use of the SOC is low and high. Fig. 3B shows that at the time of discharging, the charging/discharging deterioration speed increases in a region where the range of use of the SOC is low.

There are also effects of temperatures on the charging/discharging deterioration characteristics although the contribution thereof is not so much as the current rate. Therefore, in order to increase the accuracy of estimating the charging/discharging deterioration speed, charging/discharging deterioration characteristics defining the relationship between the range of use of the SOC and the charging/discharging deterioration factors are preferably prepared for each two-dimensional combination of a plurality of current rates and a plurality of temperatures. On the other hand, when a simple charging/discharging deterioration characteristics map is generated, it is sufficient that the temperature be regarded as a room temperature and charging/discharging deterioration characteristics for each of a plurality of current rates be prepared.

Note that the charging/discharging deterioration characteristics may be defined in a charging/discharging deterioration characteristics model (function) in which the ranges of use of the SOC, the current rates, and the temperatures are explanatory variables and charging/discharging deterioration factors Kc, Kd are response variables, instead of the map. Note that the temperatures may be constants.

The storage deterioration characteristics, the charging deterioration characteristics, and the discharging deterioration characteristics of the secondary battery described above are prepared for each of the positive electrode and the negative electrode. In the present exemplary embodiment, the storage deterioration characteristics, the charging deterioration characteristics, and the discharging deterioration characteristics of the secondary battery are used in a deterioration inhibition control switching process to be described below and are not used in a secondary battery deterioration estimation process.

In the present exemplary embodiment, peak information that appears on a dV/dQ curve obtained by differentiating the charging/discharging curve of the secondary battery is analyzed, and thus the deterioration status of each of the positive electrode and the negative electrode is analyzed independently. The charging/discharging curve of the secondary battery is a curve defining the relationship between an amount of charging/discharging and a battery voltage.

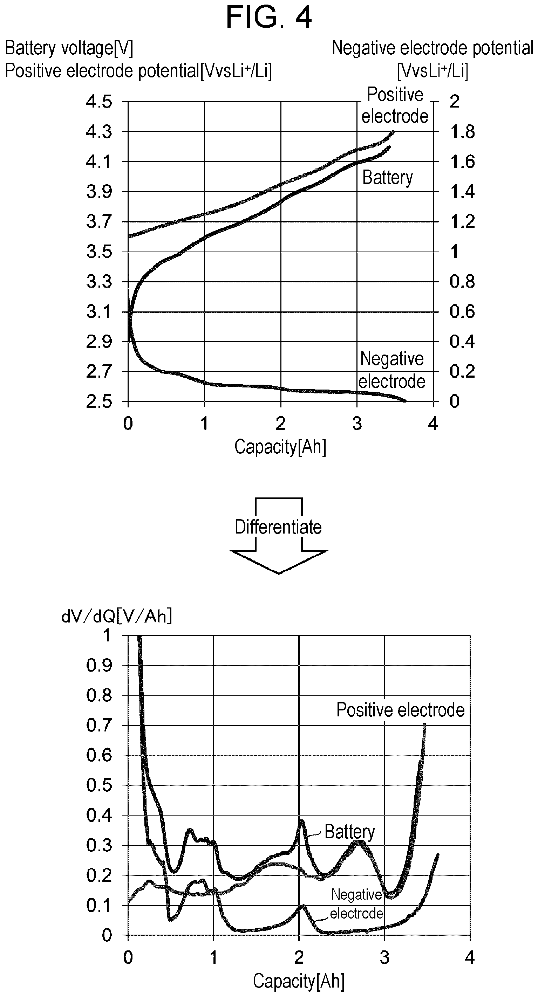

Fig. 4 is a diagram illustrating one example of the charging/discharging curves and the dV/dQ curves of the secondary battery, the positive electrode, and the negative electrode. The upper diagram shows the charging/discharging curves. The horizontal axis represents a capacity [Ah], the left vertical axis represents a battery voltage [V] and a positive electrode potential [VvsL⁺/L], and the right vertical axis represents a negative electrode potential [VvsL⁺/L]. The positive electrode potential [VvsL⁺/L] and the negative electrode potential [VvsL⁺/L] are potentials obtained when the lithium potential is set to 0V. The battery voltage, which is the difference between the positive electrode potential and the negative electrode potential, is defined by the OCV.

For example, the battery voltage at the lower limit of the battery capacity (SOC = 0%) is set to 2.5 V, and the battery voltage at the upper limit of the battery capacity (SOC = 100%) is set to 4.2V. The lower diagram shows the dV/dQ curves obtained by differentiating the charging/discharging curves of the secondary battery, the positive electrode, and the negative electrode. The horizontal axis represents a capacity [Ah], and the vertical axis represents dV/dQ [V/Ah].

In a lithium-ion battery, lithium ions move back and forth between a positive electrode active material and a negative electrode active material when the lithium-ion battery is being charged or discharged. During discharging, the negative electrode potential increases and the positive electrode potential decreases as the lithium ions move from the negative electrode to the positive electrode. The battery voltage is reduced. During charging, the positive electrode potential increases and the negative electrode potential decreases as the lithium ions move from the positive electrode to the negative electrode. The battery voltage is increased. The shape of the charging/discharging curve of the secondary battery depends on the kinds, amounts, etc., of the positive and negative electrode active materials.

Furthermore, the shape of the charging/discharging curve changes due to deterioration.

Generally, the charging/discharging curve of the secondary battery has a shape in which the voltage is gradually reduced as illustrated in Fig. 4, and it is difficult to extract, from the charging/discharging curve of the secondary battery, a structural change originating from the positive electrode active material or the negative electrode active material. In contrast, two or more peaks are observed on the dV/dQ curve of the secondary battery. Whether each peak originates from the structure of the positive electrode active material or the structure of the negative electrode active material can be estimated from at least the shapes of the dV/dQ curves of the positive electrode and the negative electrode in the initial states.

Each peak corresponds to where the rate of change in the positive electrode potential or the negative electrode potential has a local maximum or a local minimum. Each of the positive electrode potential and the negative electrode potential is determined according to the ratio of lithium contained in the active material. The ratio of lithium contained in the active material when the rate of change in the potential has a local maximum or a local minimum is constant regardless of the battery capacity. Therefore, the rate of decrease in the distance between two peaks of the dV/dQ curve of the secondary battery that originate from the positive electrode corresponds to the rate of decrease in the positive electrode capacity. For example, when the distance between two peaks of the dV/dQ curve that originate from the current positive electrode is reduced to 80% of the distance between two peaks of the dV/dQ curve that originate from the positive electrode in the initial state, the positive electrode capacity can be estimated to have decreased to 80% of that in the initial state. The same also applies to the negative electrode.

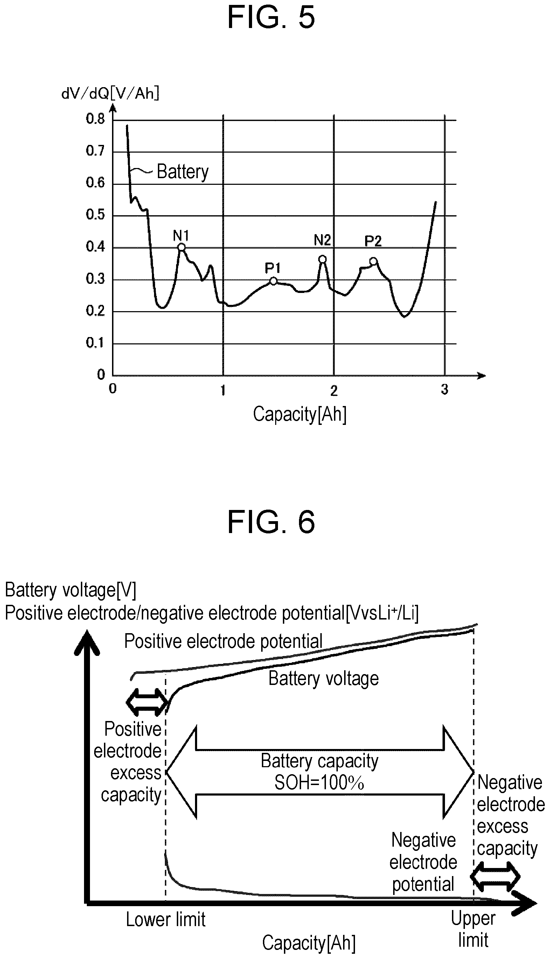

Fig. 5 is a diagram illustrating another example of the dV/dQ curve of the secondary battery. In the example illustrated in Fig. 5, four peaks (local maxima) are extracted from the dV/dQ curve of the secondary battery. First peak N1 and third peak N2 are peaks originating from the negative electrode, and second peak P1 and fourth peak P2 are peaks originating from the positive electrode. The rate of decrease in the negative electrode capacity can be estimated from the rate of decrease in the distance between first peak N1 and third peak N2 (that is, the amount of charging required for transition from first peak N1 to third peak N2). Similarly, the rate of decrease in the positive electrode capacity can be estimated from the rate of decrease in the distance between second peak P1 and fourth peak P2.

In order to estimate the charging/discharging curve of the current secondary battery, it is necessary to perform maintenance charging at a low rate from SOC = 0% to SOC = 100%. The reason why the current rate is set low is to reduce the impact of voltage drop IR due to an electric current so that a voltage close to an ideal OCV can be measured. For example, it is ideal that the maintenance charging be performed for 20 hours at a current rate of 0.05C. Furthermore, it is also possible to estimate the charging/discharging curve of the secondary battery through 7-hour maintenance charging by repeating the control of 3-minute charging at a current rate of 0.2 C and measuring a voltage after a one-minute break.

When a reference electrode made of metal lithium is introduced into the secondary battery, the positive electrode potential and the negative electrode potential can be measured. In this case, it is possible to estimate the charging/discharging curve of the positive electrode, the charging/discharging curve of the negative electrode, the dV/dQ curve of the positive electrode, and the dV/dQ curve of the negative electrode. Accordingly, the rate of decrease in the distance between two peaks of the dV/dQ curve of the positive electrode can be directly determined. Similarly, the rate of decrease in the distance between two peaks of the dV/dQ curve of the negative electrode can be directly determined.

Note that the reference electrode is not provided in typical secondary batteries that are commercially available. In view of this, in the present exemplary embodiment, a peak originating from the positive electrode and a peak originating from the negative electrode are identified from among the plurality of peaks of the dV/dQ curve of the secondary battery, and the rate of decrease in the positive electrode capacity and the rate of decrease in the negative electrode capacity are determined, as described above.

In secondary battery design, an excess capacity is typically added to each of the positive electrode and the negative electrode. A designer fills the positive electrode with a larger amount of positive electrode active material than the amount of positive electrode active material to be used for actual charging and discharging, and fills the negative electrode with a larger amount of negative electrode active material than the amount of negative electrode active material to be used for actual charging and discharging. The width of the charging/discharging curve of the positive electrode increases as the amount of positive electrode active material increases, and the width of the charging/discharging curve of the negative electrode increases as the amount of negative electrode active material increases. The width of the charging/discharging curve of each of the positive electrode and the negative electrode is reduced due to deterioration thereof.

The region where the charging/discharging curve of the positive electrode and the charging/discharging curve of the negative electrode overlap each other is the battery capacity, and a designer sets the lower limit of the battery capacity to SOC = 0% (for example, the battery voltage = 2.5 V), and sets the upper limit of the battery capacity to SOC = 100% (for example, the battery voltage = 4.2 V).

Fig. 6 is a diagram illustrating one example of the charging/discharging curves of the secondary battery, the positive electrode, and the negative electrode in the initial state of one secondary battery. The horizontal axis represents a capacity [Ah], and the vertical axis represents a battery voltage [V], a positive electrode potential [VvsL⁺/L], and a negative electrode potential [VvsL⁺/L]. In the example illustrated in Fig. 6, the lower limit capacity of the positive electrode is set lower than the lower limit capacity of the battery, meaning that in the state of SOC = 0%, further discharging is possible in practice. The difference between the lower limit capacity of the positive electrode and the lower limit capacity of the battery is a positive electrode excess capacity. The upper limit capacity of the negative electrode is set higher than the upper limit capacity of the battery, meaning that in the state of SOC = 100%, further charging is possible in practice. The difference between the upper limit capacity of the negative electrode and the upper limit capacity of the battery is a negative electrode excess capacity.

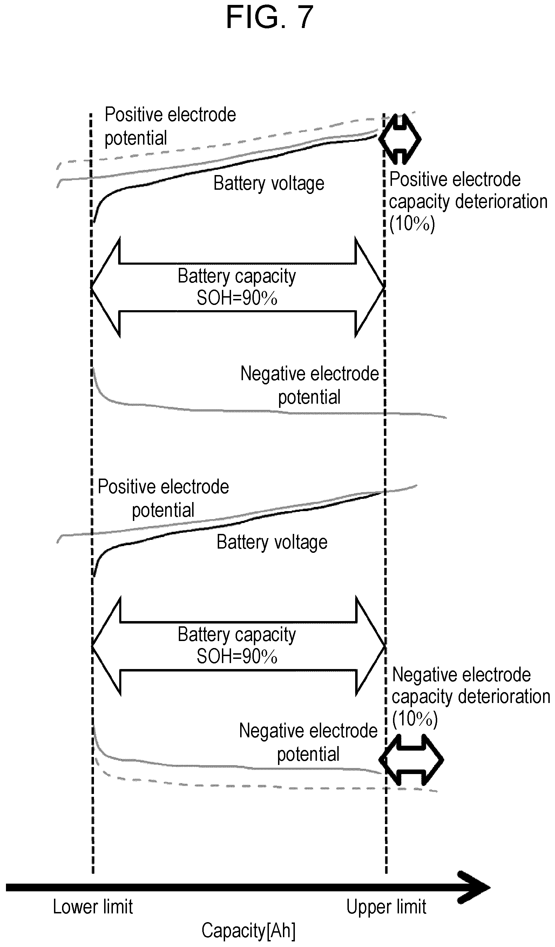

Fig. 7 is a diagram illustrating an example in which the charging/discharging curves of the secondary battery, the positive electrode, and the negative electrode are reduced in width. The upper diagram shows the state where the width of the charging/discharging curve of the positive electrode has been reduced 10% due to deterioration of the positive electrode. The lower diagram shows the state where the width of the charging/discharging curve of the negative electrode has been reduced 10% due to deterioration of the negative electrode. The BMU of the secondary battery sets the battery capacity to the range between the lower limit voltage and the upper limit voltage of the secondary battery. The battery capacity is reduced 10% both when the positive electrode capacity is reduced 10% as illustrated in the upper diagram and when the negative electrode capacity is reduced 10% as illustrated in the lower diagram.

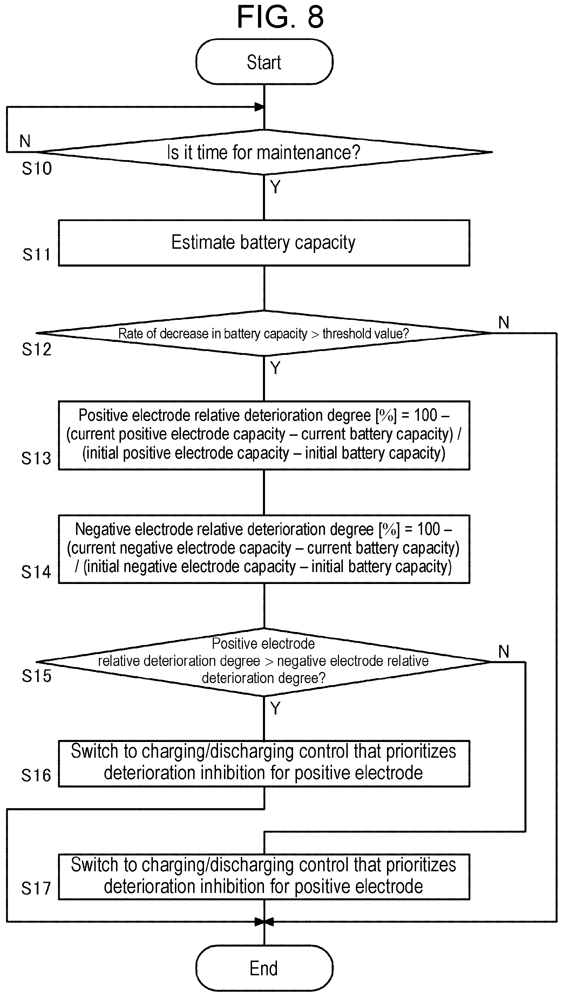

Fig. 8 is a flowchart illustrating the flow of the process of switching a charging/discharging control method performed by deterioration inhibition control system 10 according to the exemplary embodiment. When it is time for maintenance (Y in S10), charging/discharging control unit 113 transmits a maintenance charging instruction to control unit 32 of charging station 30. For example, the maintenance charging may be performed once in several months. Power supply unit 31 charges secondary battery 21 with a constant current at the current rate designated by deterioration inhibition control system 10. Control unit 25 of electric motor vehicle 20 transmits, to control unit 32 of charging station 30, battery data including the voltage, the electric current, the temperature, and the SOC measured during the maintenance charging. After the end of the maintenance charging, control unit 32 of charging station 30 transmits, to deterioration inhibition control system 10, the battery data measured during the maintenance charging.

Data obtainment unit 111 of deterioration inhibition control system 10 obtains, from charging station 30, the battery data measured during the maintenance charging, and accumulates the battery data in battery data holding unit 121. Deterioration estimation unit 112 performs a statistical process on battery data of a plurality of cells in secondary battery 21 that has been measured during the maintenance charging, and generates battery data of a representative cell.

Deterioration estimation unit 112 generates the charging/discharging curve of a representative cell on the basis of the capacity and the voltage included in the battery data of the representative cell. The capacity can be determined by adding up electric currents. Deterioration estimation unit 112 estimates, as the current battery capacity, the capacity resulting from charging between SOC = 0% (the lower limit voltage) and SOC = 100% (the upper limit voltage) (S11).

Deterioration estimation unit 112 calculates a rate of decrease in the battery capacity from the battery capacity measured during the last maintenance charging to the battery capacity measured during the current maintenance charging, and compares said rate of decrease and a threshold value (S12). When said rate of decrease is less than or equal to the threshold value (N in S12), the charging/discharging control method is not switched, and the process ends.

When said rate of decrease exceeds the threshold value (Y in S12), deterioration estimation unit 112 differentiates the charging/discharging curve of the representative cell and generates the dV/dQ curve of the representative cell. Deterioration estimation unit 112 estimates the rate of decrease in the positive electrode excess capacity from the initial positive electrode excess capacity to the current positive electrode excess capacity on the basis of the rate of decrease in the distance between two peaks of the dV/dQ curve that originate from the positive electrode. In the present exemplary embodiment, the rate of decrease in the positive electrode excess capacity is defined as a positive electrode relative deterioration degree [%], as indicated in (Equation 1) below (S13).

Positive electrode relative deterioration degree [%] = 100 - (Current positive electrode capacity - Current battery capacity) / (Initial positive electrode capacity - Initial battery capacity) ... (Equation 1)

Deterioration estimation unit 112 estimates the rate of decrease in the negative electrode excess capacity from the initial negative electrode excess capacity to the current negative electrode excess capacity on the basis of the rate of decrease in the distance between two peaks of the dV/dQ curve that originate from the negative electrode. **In** the present exemplary embodiment, the rate of decrease in the negative electrode excess capacity is defined as a negative electrode relative deterioration degree [%], as indicated in (Equation 2) below (S14).

Negative electrode relative deterioration degree [%] = 100 - (Current negative electrode capacity - Current battery capacity) / (Initial negative electrode capacity - Initial battery capacity) ... (Equation 2)

When the positive electrode relative deterioration degree is greater than the negative electrode relative deterioration degree (Y in S15), charging/discharging control unit 113 switches the charging/discharging control to charging/discharging control that prioritizes the deterioration inhibition for the positive electrode (S16), and when the negative electrode relative deterioration degree is greater than the positive electrode relative deterioration degree (N in S15), charging/discharging control unit 113 switches the charging/discharging control to charging/discharging control that prioritizes the deterioration inhibition for the negative electrode (S17).

A situation where the positive electrode relative deterioration degree is greater than the negative electrode relative deterioration degree corresponds to the example illustrated in the upper diagram in Fig. 7; in this situation, the negative electrode excess capacity is relatively large and therefore, the charging/discharging control that prioritizes the deterioration inhibition for the positive electrode is selected.

**In** contrast, a situation where the negative electrode relative deterioration degree is greater than the positive electrode relative deterioration degree corresponds to the example illustrated in the lower diagram in Fig. 7; in this situation, the positive electrode excess capacity is relatively large and therefore, the charging/discharging control that prioritizes the deterioration inhibition for the negative electrode is selected.

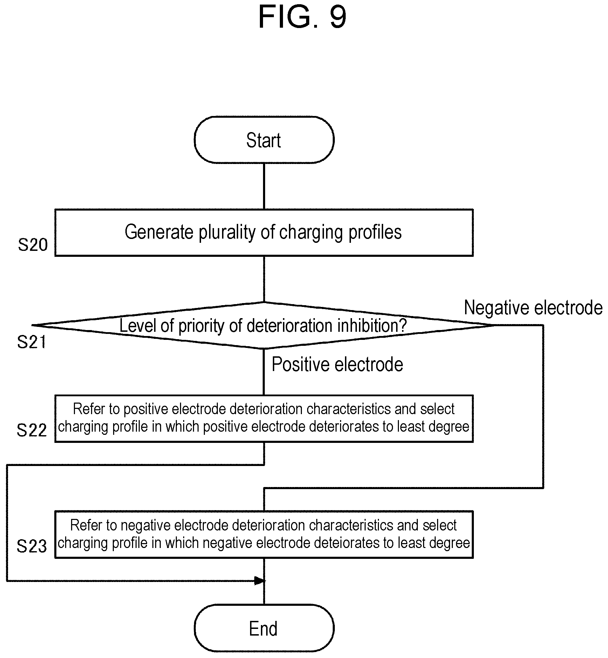

Fig. 9 is a flowchart illustrating one example of the deterioration inhibition control performed during charging by deterioration inhibition control system 10 according to the exemplary embodiment. Charging/discharging control unit 113 generates a plurality of charging profiles before charging of secondary battery 21 (S20).

For example, according to a user operation, charging/discharging control unit 113 obtains a target SOC, a charging start time, and a charging end time of secondary battery 21, and obtains the current SOC of secondary battery 21 from control unit 25 of electric motor vehicle 20. Charging/discharging control unit 113 sets a plurality of slots at a predetermined interval within a chargeable time that lasts between the obtained charging start time and the obtained charging end time. Charging/discharging control unit 113 generates two or more patterns of charging profiles in which a current rate is assigned to each slot in a range satisfying the condition that the SOC of secondary battery 21 has reached the target SOC at the charging end time.

The current rate assigned to one slot may be 0 (a break period). Charing/discharging control unit 113 may exhaustively generate several hundred patterns of charging profiles.

When the charging/discharging control that prioritizes the deterioration inhibition for the positive electrode is selected (positive electrode in S21), charging/discharging control unit 113 refers to the storage deterioration characteristics and the charging deterioration characteristics of the positive electrode in the plurality of charging profiles, and selects a charging profile in which the positive electrode deteriorates to the least degree (S22). Specifically, charging/discharging control unit 113 inputs the SOC and the current rate of each slot in the charging profiles, and calculates the storage deterioration characteristics of the positive electrode and the charging deterioration factor of the positive electrode in the slot. Charging/discharging control unit 113 selects a charging profile in which the total of the storage deterioration factor of the positive electrode and the charging deterioration factor of the positive electrode is smallest.

When the charging/discharging control that prioritizes the deterioration inhibition for the negative electrode is selected (negative electrode in S21), charging/discharging control unit 113 refers to the storage deterioration characteristics and the charging deterioration characteristics of the negative electrode in the plurality of charging profiles, and selects a charging profile in which the negative electrode deteriorates to the least degree (S23). Specifically, charging/discharging control unit 113 inputs the SOC and the current rate of each slot in the charging profiles, and calculates the storage deterioration characteristics of the negative electrode and the charging deterioration factor of the negative electrode in the slot. Charging/discharging control unit 113 selects a charging profile in which the total of the storage deterioration factor of the negative electrode and the charging deterioration factor of the negative electrode is smallest.

Note that when electric motor vehicle 20 is a self-driving car, a discharging plan in which deterioration is inhibited can be generated on the basis of a delivery plan. Charging/discharging control unit 113 generates a plurality of discharging profiles before the departure of electric motor vehicle 20. When the charging/discharging control that prioritizes the deterioration inhibition for the positive electrode is selected, charging/discharging control unit 113 refers to the storage deterioration characteristics and the charging deterioration characteristics of the positive electrode in the plurality of discharging profiles, and selects a discharging profile in which the positive electrode deteriorates to the least degree. When the charging/discharging control that prioritizes the deterioration inhibition for the negative electrode is selected, charging/discharging control unit 113 refers to the storage deterioration characteristics and the charging deterioration characteristics of the negative electrode in the plurality of discharging profiles, and selects a discharging profile in which the negative electrode deteriorates to the least degree.

As described above, according to the present exemplary embodiment, the positive electrode relative deterioration degree and the negative electrode relative deterioration degree are calculated on the basis of a change in the battery capacity and changes in the positions of peaks of the dV/dQ curves at which the structural changes of the positive electrode active material and the negative electrode active material appear. Charging/discharging control is performed such that, using these positive electrode relative deterioration degree and negative electrode relative deterioration degree as a scale, the balance between the positive electrode relative deterioration degree and the negative electrode relative deterioration degree is maintained, in other words, the region in which the charging/discharging curve of the positive electrode and the charging/discharging curve of the negative electrode overlap each other is maximized. Thus, the progress of the deterioration on a cell level (the deterioration of the state of health (SOH)) can be inhibited to the greatest extent possible.

The present disclosure has been described thus far based on the exemplary embodiment. The exemplary embodiment is merely an example; a person having ordinary skill in the art will readily appreciate that various variations are possible as a combination of these structural elements and these processes and that these variations are also included in the scope of the present disclosure.

Deterioration inhibition control system 10 described above may be provided in control unit 25 of electric motor vehicle 20 or control unit 32 of charging station 30.

The above-described exemplary embodiment has assumed that electric motor vehicle 20 is a four-wheel electric vehicle. In this regard, electric motor vehicle 20 may be an electric motorcycle (an electric scooter), an electric bicycle, or an electric kick scooter. Examples of the electric vehicle include not only a standard electric vehicle, but also a low-speed electric vehicle such as a golf cart or a land car. Furthermore, an object on which secondary battery 21 is mounted is not limited to electric motor vehicle 20. Examples of the object on which secondary battery 21 is mounted include an electric mobile vehicle such as an electric boat or ship, a railroad car, or a multirotor (a drone), a stationary power storage system, and a consumer electronic device (such as a smartphone or a laptop computer).

Note that the exemplary embodiment may be specified according to the following items.

### [Item 1]

A deterioration inhibition control system (10) including:
an obtainment unit (111) that obtains battery data including a voltage and an electric current of a secondary battery (21);
an estimation unit (112) that estimates, based on the battery data of the secondary battery (21), a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
a charging/discharging control unit (113) that when the rate of decrease in the excess capacity of the positive electrode is greater than the rate of decrease in the excess capacity of the negative electrode, switches charging/discharging control to charging/discharging control that prioritizes deterioration inhibition for the positive electrode, and when the rate of decrease in the excess capacity of the negative electrode is greater than the rate of decrease in the excess capacity of the positive electrode, switches the charging/discharging control to charging/discharging control that prioritizes deterioration inhibition for the negative electrode.

Thus, it is possible to minimize deterioration of the secondary battery (21).

### [Item 2]

The deterioration inhibition control system (10) according to item 1, wherein
the estimation unit (112) performs the following:
generates a dV/dQ curve by differentiating a charging/discharging curve defining a relationship between a capacity and a voltage of the secondary battery (21);
estimates the rate of decrease in the excess capacity of the positive electrode based on a rate of decrease in a distance between two peaks of the dV/dQ curve that originate from the positive electrode; and
estimates the rate of decrease in the excess capacity of the negative electrode based on a rate of decrease in a distance between two peaks of the dV/dQ curve that originate from the negative electrode.

Thus, the rate of decrease in the excess capacity of the positive electrode and the rate of decrease in the excess capacity of the negative electrode can be accurately estimated from the charging/discharging curve of the secondary battery (21).

### [Item 3]

The deterioration inhibition control system (10) according to item 1, wherein
when a rate of decrease in a capacity of the secondary battery (21) exceeds a threshold value,
the estimation unit (112) estimates the rate of decrease in the excess capacity of the positive electrode and the rate of decrease in the excess capacity of the negative electrode, and
the charging/discharging control unit (113) performs control to switch the charging/discharging control based on a relationship between the rate of decrease in the excess capacity of the positive electrode and the rate of decrease in the excess capacity of the negative electrode.

Thus, the frequency of switching the charging/discharging control can be optimized.

### [Item 4]

The deterioration inhibition control system (10) according to item 1, further including:
a deterioration characteristics holding unit (122) that holds storage deterioration characteristics and charging deterioration characteristics of the positive electrode of the secondary battery (21) and storage deterioration characteristics and charging deterioration characteristics of the negative electrode of the secondary battery (21), wherein
in charging the secondary battery (21),
when the charging/discharging control that prioritizes the deterioration inhibition for the positive electrode is selected, the charging/discharging control unit (113) refers to the storage deterioration characteristics and the charging deterioration characteristics of the positive electrode in a plurality of charging profile candidates, and selects a charging profile in which the positive electrode deteriorates to a least degree, and
when the charging/discharging control that prioritizes the deterioration inhibition for the negative electrode is selected, the charging/discharging control unit (113) refers to the storage deterioration characteristics and the charging deterioration characteristics of the negative electrode in the plurality of charging profile candidates, and selects a charging profile in which the negative electrode deteriorates to a least degree.

Thus, it is possible to create a charging plan in which the deterioration of the secondary battery (21) is minimized.

### [Item 5]

A deterioration inhibition control method including the steps of:
obtaining battery data including a voltage and an electric current of a secondary battery (21);
estimating, based on the battery data of the secondary battery (21), a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
when the rate of decrease in the excess capacity of the positive electrode is greater than the rate of decrease in the excess capacity of the negative electrode, switching charging/discharging control to charging/discharging control that prioritizes deterioration inhibition for the positive electrode, and when the rate of decrease in the excess capacity of the negative electrode is greater than the rate of decrease in the excess capacity of the positive electrode, switching the charging/discharging control to charging/discharging control that prioritizes deterioration inhibition for the negative electrode.

Thus, it is possible to minimize deterioration of the secondary battery (21).

### [Item 6]

A deterioration inhibition control program that causes a computer to execute the processes of:
obtaining battery data including a voltage and an electric current of a secondary battery (21);
estimating, based on the battery data of the secondary battery (21), a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
when the rate of decrease in the excess capacity of the positive electrode is greater than the rate of decrease in the excess capacity of the negative electrode, switching charging/discharging control to charging/discharging control that prioritizes deterioration inhibition for the positive electrode, and when the rate of decrease in the excess capacity of the negative electrode is greater than the rate of decrease in the excess capacity of the positive electrode, switching the charging/discharging control to charging/discharging control that prioritizes deterioration inhibition for the negative electrode.

Thus, it is possible to minimize deterioration of the secondary battery (21).

### Reference Signs List

- 2: commercially available power system
- 5: network
- 10: deterioration inhibition control system
- 11: control unit
- 12: storage unit
- 13: communication unit
- 20: electric motor vehicle
- 21: secondary battery
- 22: voltage sensor
- 23: current sensor
- 24: temperature sensor
- 25: control unit
- 26: communication unit
- 30: charging station
- 31: power supply unit
- 32: control unit
- 33: communication unit
- 111: data obtainment unit
- 112: deterioration estimation unit
- 113: charging/discharging control unit
- 121: battery data holding unit
- 122: deterioration characteristics holding unit

## Claims

1. A deterioration inhibition control system comprising:
an obtainment unit that obtains battery data including a voltage and an electric current of a secondary battery;
an estimation unit that estimates, based on the battery data of the secondary battery, a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
a charging-discharging control unit that when the rate of decrease in the excess capacity of the positive electrode is greater than the rate of decrease in the excess capacity of the negative electrode, selects first charging-discharging control that prioritizes deterioration inhibition for the positive electrode, and when the rate of decrease in the excess capacity of the negative electrode is greater than the rate of decrease in the excess capacity of the positive electrode, selects second charging-discharging control that prioritizes deterioration inhibition for the negative electrode.

2. The deterioration inhibition control system according to claim 1, wherein
the estimation unit performs the following:
generates a dV/dQ curve by differentiating a charging-discharging curve defining a relationship between a capacity and a voltage of the secondary battery;
estimates the rate of decrease in the excess capacity of the positive electrode based on a rate of decrease in a distance between two peaks of the dV/dQ curve that originate from the positive electrode; and
estimates the rate of decrease in the excess capacity of the negative electrode based on a rate of decrease in a distance between two peaks of the dV/dQ curve that originate from the negative electrode.

3. The deterioration inhibition control system according to claim 1, wherein
when a rate of decrease in a capacity of the secondary battery exceeds a threshold value,
the estimation unit estimates the rate of decrease in the excess capacity of the positive electrode and the rate of decrease in the excess capacity of the negative electrode, and
the charging-discharging control unit performs the selecting between the first charging-discharging control and the second charging-discharging control based on a relationship between the rate of decrease in the excess capacity of the positive electrode and the rate of decrease in the excess capacity of the negative electrode.

4. The deterioration inhibition control system according to claim 1, further comprising:
a deterioration characteristics holding unit that holds storage deterioration characteristics and charging deterioration characteristics of the positive electrode of the secondary battery and storage deterioration characteristics and charging deterioration characteristics of the negative electrode of the secondary battery, wherein
in charging the secondary battery,
when the first charging-discharging control that prioritizes the deterioration inhibition for the positive electrode is selected, the charging-discharging control unit refers to the storage deterioration characteristics and the charging deterioration characteristics of the positive electrode in a plurality of charging profile candidates, and selects a charging profile in which the positive electrode deteriorates to a least degree, and
when the second charging-discharging control that prioritizes the deterioration inhibition for the negative electrode is selected, the charging-discharging control unit refers to the storage deterioration characteristics and the charging deterioration characteristics of the negative electrode in the plurality of charging profile candidates, and selects a charging profile in which the negative electrode deteriorates to a least degree.

5. A deterioration inhibition control method comprising the steps of:
obtaining battery data including a voltage and an electric current of a secondary battery;
estimating, based on the battery data of the secondary battery, a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
when the rate of decrease in the excess capacity of the positive electrode is greater than the rate of decrease in the excess capacity of the negative electrode, selecting first charging-discharging control that prioritizes deterioration inhibition for the positive electrode, and when the rate of decrease in the excess capacity of the negative electrode is greater than the rate of decrease in the excess capacity of the positive electrode, selecting second charging-discharging control that prioritizes deterioration inhibition for the negative electrode.

6. A deterioration inhibition control program that causes a computer to execute the processes of:
obtaining battery data including a voltage and an electric current of a secondary battery;
estimating, based on the battery data of the secondary battery, a rate of decrease in an excess capacity of a positive electrode from an initial excess capacity to a current excess capacity of the positive electrode and a rate of decrease in an excess capacity of a negative electrode from an initial excess capacity to a current excess capacity of the negative electrode; and
when the rate of decrease in the excess capacity of the positive electrode is greater than the rate of decrease in the excess capacity of the negative electrode, selecting first charging-discharging control that prioritizes deterioration inhibition for the positive electrode, and when the rate of decrease in the excess capacity of the negative electrode is greater than the rate of decrease in the excess capacity of the positive electrode, selecting second charging-discharging control that prioritizes deterioration inhibition for the negative electrode.

7. A non-transitory recording medium on which a charging control program according to claim 6 is written.
